**Europäisches Patentamt**

**European Patent Office**

**Office européen des brevets**

(11) Numéro de publication: **0 153 224**
**A 1**

# (12) DEMANDE DE BREVET EUROPEEN

(21) Numéro de dépôt: **85400210.2**

(22) Date de dépôt: **08.02.85**

(51) Int. Cl.⁴: **E 21 B 19/16**

(30) Priorité: **10.02.84 FR 8402063**

(71) Demandeur: **VALLOUREC Société Anonyme dite., 7, place du Chancelier Adenauer, F-75116 Paris (FR)**

(43) Date de publication de la demande: **28.08.85**
**Bulletin 85/35**

(72) Inventeur: **Fradin, Louis, 26, Allée des Grands Chênes, F-59620 - Aulnoy (FR)**
Inventeur: **Plaquin, Bernard, 15, Rond Point des Acacias, F-59620 - Aulnoy (FR)**
Inventeur: **Salkin, Hervé, 16, rue Louis Lumière, F-59620 - Aulnoy (FR)**

(84) Etats contractants désignés: **DE FR GB IT NL**

(74) Mandataire: **Nony, Michel, Cabinet Nony 29, rue Cambacérès, F-75008 Paris (FR)**

(54) Procédé pour déterminer le couple de vissage d'un joint tubulaire comportant un filetage conique et une butée de limitation de vissage, utilisable dans l'industrie du pétrole et dispositifs pour mettre en oeuvre ce procédé.

(57) L'invention est relative à un procédé pour déterminer le couple de vissage à appliquer sur un joint pour tubes, destinés à l'industrie du pétrole, selon lequel on détermine sur l'élément mâle et sur l'élément femelle un repère tel que, lorsque les deux repères sont amenés l'un en face de l'autre, les butées de limitation de vissage (2) de l'élément mâle (1) et l'élément femelle viennent au contact l'une de l'autre; que après l'avoir enduit de graisse on procède au vissage en appliquant un couple suffisant pour faire tourner un élément par rapport à l'autre d'un angle prédéterminé au-delà du point où les repères sont l'un en face de l'autre, et que l'on mesure le couple; que l'on renouvelle cette opération sur un nombre suffisant de joints; et que l'on détermine le domaine des couples de vissage que l'on doit appliquer aux joints de ce type avec la graisse qui a été utilisée.

Procédé pour déterminer le couple de vissage d'un joint tubulaire comportant un filetage conique et une butée de limitation de vissage, utilisable dans l'industrie du pétrole et dispositifs pour mettre en oeuvre ce procédé.

La présente invention est relative à un nouveau procédé pour déterminer le couple de vissage que l'on doit appliquer pour le serrage d'un joint pour tubes d'acier, comportant des filetages coniques et/ou des surfaces frettantes et au moins une butée de limitation de vissage. De tels joints sont utilisés dans l'industrie pétrolière, notamment pour réaliser des cuvelages ou des canalisations d'extraction du pétrole ou du gaz.

La présente invention a également pour objet des dispositifs pour la mise en oeuvre de ce procédé.

On utilise couramment dans l'industrie du pétrole des joints pour tubes d'acier qui présentent des filetages tronconiques et au moins une butée de limitation de vissage qui est généralement disposée à l'intérieur de l'élément femelle au-delà du filetage, butée contre laquelle vient prendre appui lors du serrage l'extrémité de l'élément mâle.

Comme les filetages et/ou d'autres surfaces de l'élément mâle et de l'élément femelle sont généralement frettants, c'est-à-dire que pour que l'extrémité de l'élément mâle puisse venir au contact de la butée de limitation de vissage de l'élément femelle, il est nécessaire qu'il s'exerce des efforts radiaux au niveau du filetage et/ou des autres surfaces frettantes qui tendent à réduire le diamètre du filetage de l'élément mâle et à accroître le diamètre du filetage de l'élément femelle, il n'est dans la pratique pas possible de déterminer facilement lors du vissage d'un élément mâle donné dans un élément femelle donné, le moment à partir duquel l'extrémité de l'élément mâle vient prendre appui contre la butée de limitation de vissage de l'élément femelle.

Par ailleurs, différents facteurs interviennent pour la détermination du couple qu'il est nécessaire d'appliquer au joint pour amener en contact les butées de limitation de vissage.

Certains facteurs aléatoires sont constitués par les tolérances d'usinage concernant, d'une part le diamètre des filetages de l'élément mâle et de l'élément femelle, et d'autre part les positions axiales des butées par rapport à ces filetages.

Toutefois, bien qu'aléatoires, ces facteurs varient pour une famille de joints donnée, entre des limites qui sont relativement bien déterminées.

Le couple de vissage permettant d'amener en contact les butées de limitation de vissage dépend également de facteurs qui sont relativement stables comme par exemple les caractéristiques mécaniques de la graisse qui est utilisée pour être placée au niveau des filetages et des butées avant le vissage du joint.

Or, on sait que les caractéristiques de la graisse qui est utilisée, ont une influence déterminante sur le couple de vissage qu'il est nécessaire de donner au joint pour obtenir un serrage optimal.

Conformément à l'état de la technique actuel, les fabricants donnent pour chaque type de joint un domaine de couples de vissage optimaux qui sont déterminés en utilisant une graisse de référence.

Cela implique que l'on vérifie que la graisse utilisée sur chantier présente les mêmes caractéristiques que la graisse de référence ou que par des tables de correspondance ou des mesures difficiles à effectuer sur chantier, l'on tienne compte des différences existant entre la graisse de référence et la graisse effectivement utilisée.

Toutes ces mesures et ces déterminations sont longues et compliquées et risquent souvent de conduire à des erreurs dont les conséquences peuvent être importantes.

Il est en effet très déterminant pour la bonne tenue des joints filetés, en particulier dans le cas où les tubes d'acier sont soumis à des contraintes axiales importantes que quelles que soient les conditions d'utilisation du joint, les butées de limitation de vissage soient appliquées l'une sur l'autre avec des forces axiales suffisantes, faute de quoi, les qualités de fonctionnement du joint se dégradent très rapidement.

Il est cependant tout aussi important que lors du vissage l'on n'applique pas sur les surfaces de limitation de vissage des forces telles que ces butées s'en trouveraient détériorées et seraient ainsi rendues inutilisables.

Il en résulte que pour un fonctionnement correct du joint, il est nécessaire que soit appliqué sur un joint de type déterminé, un couple de vissage final qui est situé dans un domaine bien déterminé.

Or, ce domaine se trouve dans certains cas d'une étendue limitée, en particulier dans le cas de joints de type manchonné dans lesquels deux éléments mâles (dont les butées et les filetages sont usinés dans la seule épaisseur normale du tube), sont reliés par un manchon qui constitue un double élément femelle.

La présente invention permet d'une manière simple et rapide de déterminer directement sur chantier le domaine des couples avec lesquels des joints de type particulier doivent être vissés en utilisant une graisse de type particulier qui n'est pas nécessairement la graisse de référence.

La présente invention a pour objet un procédé pour déterminer le domaine des couples de vissage à appliquer sur un joint pour tubes d'acier destinés à l'industrie du pétrole, joint constitué par un élément mâle et un élément femelle comportant des filetages tronconiques frettants et/ou des

0153224

3

surfaces frettantes, et au moins un couple de butées de limitation de vissage mises sous contraintes axiales lors du vissage, caractérisé par le fait que l'on détermine sur la périphérie de l'élément mâle et sur la périphérie de l'élément femelle un repère, dont les positions sont telles que lorsque les deux repères sont amenés l'un en face de l'autre, les butées de limitation de vissage de l'élément mâle et l'élément femelle viennent au contact l'une de l'autre pour la première fois; qu'après avoir enduit de graisse les filetages et les butées on visse le joint en lui appliquant ensuite un couple suffisant pour faire tourner au-delà du point où les repères sont l'un en face de l'autre, dans le sens du vissage, un élément par rapport à l'autre d'un angle prédéterminé en fonction de la nature du joint, et que l'on mesure le couple nécessaire pour obtenir un tel vissage; que l'on renouvelle cette opération sur un nombre suffisant d'éléments mâles et d'éléments femelles de même type pour prendre en considération les variations dimensionnelles dues aux tolérances de fabrication; et que l'on détermine le domaine des couples de vissage que l'on doit appliquer aux joints de ce type avec la graisse qui a été utilisée.

Conformément à l'invention, on détermine les repères sur l'élément mâle et sur l'élément femelle en déterminant la génératrice pour laquelle un filet donné se trouve à une distance axiale donnée de la butée de limitation de vissage sur l'élément mâle d'une part et sur l'élément femelle d'autre part, en tenant éventuellement compte de l'allongement de l'élément mâle et du raccourcissement de l'élément femelle qui peuvent intervenir lors du vissage en raison du frettage entre le filetage mâle et le filetage femelle ou et entre toutes autres surfaces frettantes.

On obtient de cette manière que lorsque les deux repères de l'élément mâle et de l'élément femelle sont disposés l'un en face de l'autre, les deux surfaces de limitation de vissage sont juste venues au contact l'une de l'autre.

D'une manière générale le frettage qui nécessite l'application d'un certain couple pour que les butées de limitation de vissage viennent au contact l'une de l'autre, est obtenu principalement au niveau des filetages. Toutefois, ce couple peut également résulter de l'existence de surfaces d'étanchéité frettantes qui sont appliquées l'une sur l'autre avec une force suffisante pour assurer l'étanchéité.

L'invention s'applique également aux joints munis de filetages cylindriques, c'est-à-dire non frettants, mais qui comportent d'autres surfaces frettantes telles que des surfaces d'étanchéité.

La présente invention a également pour objet un dispositif caractérisé par le fait qu'il est constitué par un couple de calibres de repérage qui comportent chacun une butée correspondant à la butée de limitation de vissage de l'élément mâle ou de l'élément femelle, au moins un filet correspondant au filetage de l'élément correspondant et un moyen tel qu'une fente permettant le marquage d'un repère sur l'élément sur lequel le calibre est engagé, la distance entre le point du filet situé en face du repère et la butée étant la même sur le calibre mâle que sur le calibre femelle.

Dans un mode particulier de réalisation de l'invention on peut utiliser des calibres mâle et femelle de forme générale cylindrique qui comportent des surfaces correspondant uniquement aux surfaces filetées et aux butées de limitation de vissage de l'élément mâle et de l'élément femelle du joint, le repère du calibre mâle étant aligné avec le repère du calibre femelle lorsque après vissage, les surfaces de limitation de vissage des deux calibres arrivent au contact l'une de l'autre.

Pour réaliser le marquage des repères sur les éléments de joints conformément à l'invention, il suffit ensuite de visser le calibre correspondant sur les éléments mâle et femelle qui doivent être réunis pour pouvoir marquer les repères.

Dans un mode de réalisation particulier les calibres conformes à l'invention sont constitués seulement par des barrettes, c'est-à-dire par une partie circonférentielle de faible étendue du calibre cylindrique complet.

De cette manière, les calibres qui peuvent être d'une épaisseur relativement faible, par exemple de quelques centimètres, sont facilement engagés sur les filetages de l'élément mâle ou de l'élément femelle, selon qu'il s'agit de calibre femelle ou de calibre mâle, et en déplaçant lesdites barrettes le long du filetage jusqu'à ce que la butée du calibre vienne prendre appui sur la butée de limitation de vissage de l'élément de joint on peut déterminer la position du repère sur l'élément de joint.

Dans un mode de réalisation particulièrement simple, le calibre comporte une fente allongée dont la direction correspond à celle des génératrices du tube, un organe de marquage est alors introduit à travers cette fente pour réaliser le repère sur l'élément de joint.

Dans le but de mieux faire comprendre l'invention on va décrire maintenant à titre d'illustration et sans aucun caractère limitatif un mode de réalisation pris comme exemple représenté sur le dessin annexé.

Sur ce dessin :

- la figure 1 est une vue en coupe d'un élément mâle sur lequel est placé un calibre femelle dans la position qui correspond au marquage du repère sur l'élément mâle,

- la figure 2 est une vue de-dessus correspondant à la figure 1,

- la figure 3 est une vue en coupe de l'élément femelle du joint qui est destiné à s'assembler avec l'élément mâle de la figure 1, un calibre mâle étant placé sur l'élément femelle dans la position qui correspond à la réalisation du repère, et

- la figure 4 représente une vue de-dessus correspondant à la figure 3.

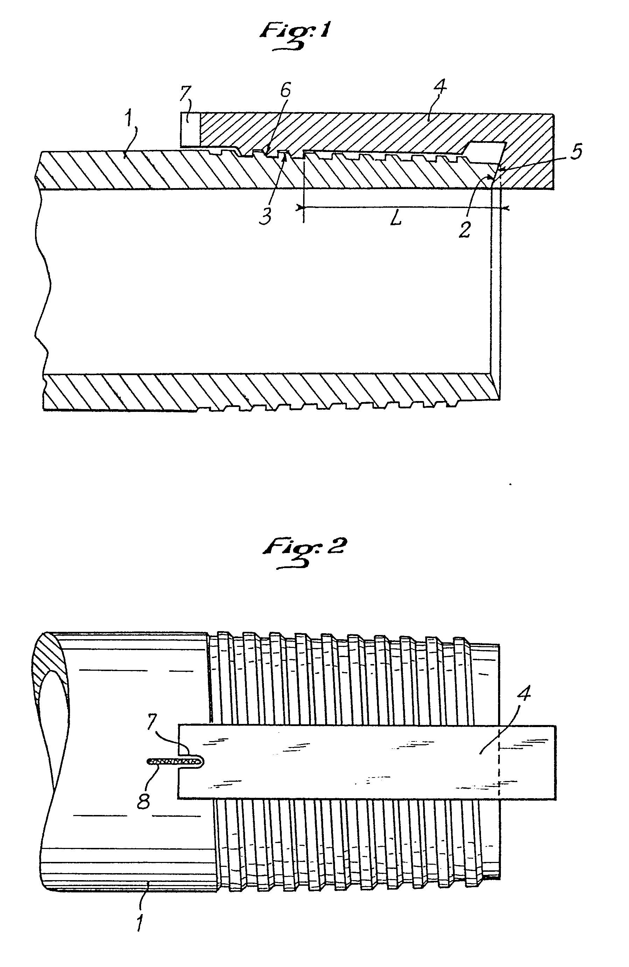

On voit sur la figure 1 l'extrémité de l'élément mâle 1 qui est munie d'une butée de limitation de vissage 2 et d'un filetage tronconique 3. Un calibre femelle 4 qui comporte une butée 5 correspondant à la butée de limitation de vissage de l'élément femelle, ainsi qu'une partie de filetage 6 (dans le cas présent trois filets) se trouve placée sur l'extrémité de l'élément mâle.

Dans la position représentée sur le dessin on a fait tourner à la main le calibre 4 dans le sens du vissage de manière qu'il s'exerce un très léger effort radial de compression assurant le contact des butées 2 et 5. Comme on peut le voir sur la figure 2, le calibre 4 présente une largeur de quelques centimètres qui permet une manipulation facile.

Dans le mode de réalisation représenté, le calibre 4 présente une échancrure allongée 7 qui permet de tracer un repère 8 sur une partie non usinée de l'élément mâle 1. Ce repère 8 peut être réalisé en étant légèrement gravé à l'aide d'une pointe sèche, il peut être également constitué par un marquage à la peinture ou à l'aide d'un autre colorant.

On remarque que, conformément à l'invention, le calibre femelle ne s'engage sur l'élément mâle que par sa butée correspondant à la butée de limitation de vissage 5, et par une section de filetage 6, le calibre 7 ne devant pas venir en contact de l'élément mâle 1 au niveau d'autres surfaces telles que par exemple les surfaces d'étanchéité.

On a également représenté sur la figure 1 la distance de référence L entre le flanc porteur d'un filet déterminé et l'extrémité de l'élément mâle qui correspond au repère.

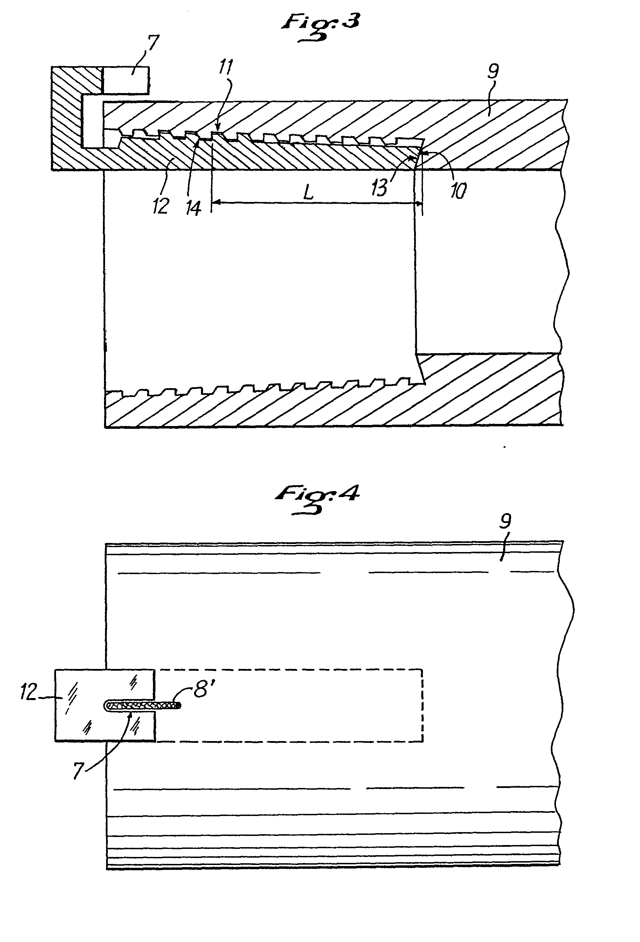

On voit sur la figure 3 en coupe l'élément femelle 9 qui comporte une butée de limitation de vissage 10 et un filetage tronconique 11 correspondant au filetage 3 de l'élément mâle.

On a placé sur l'élément femelle le calibre mâle 12 qui comporte une butée 13 et des éléments de filetage 14 qui dans le cas présent sont réduits à trois filets. Le calibre mâle 12 est tourné à la main sur l'élément femelle jusqu'à ce que les butées 10 et 13 viennent au contact l'une de l'autre, ce qui permet de s'assurer que le calibre est placé sur la génératrice de l'élément femelle pour laquelle la distance L entre le filet

# 0153224

6

de référence et la butée de limitation de vissage 10 est égale à la distance correspondante sur l'élément mâle.

Le calibre mâle comporte une échancrure allongée 7 comme le calibre femelle de la figure 1, ce qui permet le marquage d'un repère 8' sur la périphérie de l'élément femelle.

On voit que de cette manière, conformément à l'invention, il est possible d'une manière simple et rapide de réaliser sur un couple d'élément mâle et d'élément femelle devant être vissés ensemble deux repères 8 et 8' qui sont tels que lorsque ces repères sont amenés à coïncidence par vissage, la butée à l'extrémité de l'élément mâle vient juste au contact de la butée de limitation de vissage 10 de l'élément femelle.

Dans le cas où en raison du frettage intervenant au niveau des filetages mâle et femelle et de toutes autres surfaces frettantes, il se produirait lors du vissage du joint un allongement de l'élément mâle (dû à sa contraction diamétrale) et un raccourcissement de l'élément femelle (dû à son élargissement diamétral), il est avantageux, conformément à l'invention, de tenir compte de ces variations de longueur des deux éléments en décalant angulairement en conséquence, la position de l'un ou des deux repères 8 et 8', de manière à ce que lors du vissage du joint, les deux surfaces de butées viennent au contact l'une de l'autre lorsque les deux repères 8 et 8' coïncident.

Pour mettre en oeuvre le procédé selon l'invention, on sélectionne tout d'abord au hasard un nombre suffisant de couples d'éléments mâles et femelles de mêmes caractéristiques, et l'on réalise comme indiqué ci-dessus un repère sur chacun des éléments de joints.

On enduit les filetages et les butées de limitation de vissage avec la graisse qui doit être utilisée pour le serrage des joints et l'on mesure pour chacun des joints le couple de vissage qu'il est nécessaire de leur appliquer pour qu'au-delà de leur position d'alignement, les repères 8 et 8' soient décalés d'un angle de rotation prédéterminé qui dépend de l'effort axial que l'on veut appliquer sur les butées de limitation de vissage.

Dans la pratique, ce décalage est généralement compris entre 5 et 15 degrés.

Les couples mesurés sur chacun des joints testés sont reportés sur un graphique qui a généralement la forme d'une courbe de Gauss et qui permet de déterminer facilement les valeurs minimales et maximales du couple de serrage que l'on doit donner au joint compte tenu des tolérances d'usinage et de la nature de la graisse utilisée.

Généralement, il suffit de mesurer le couple sur dix à vingt joints pour obtenir avec une bonne précision du domaine des couples de vissage qui doivent être appliqués.

Il est bien entendu que le mode de mise en oeuvre de l'invention qui vient d'être décrit ne présente aucun caractère limitatif et qu'il pourra recevoir toute modification désirable sans sortir pour cela du cadre de l'invention.

En particulier, si l'utilisation de calibres sous forme de barrettes est particulièrement avantageuse, il est néanmoins possible d'utiliser des calibres cylindriques tels que ceux qui sont généralement utilisés dans l'industrie des tubes.

Enfin, il va de soi que l'invention n'est pas limitée aux joints qui ne comportent qu'un seul couple de butées de limitation de vissage, étant entendu que le positionnement des repères sur les éléments de joint serait déterminé par rapport aux butées de limitation de vissage qui viennent en contact les premières dans le cas où il y aurait plusieurs couples de butées de limitation de vissage.

REVENDICATIONS

1. Procédé pour déterminer le domaine des couples de vissage à appliquer sur un joint pour tubes d'acier, destinés à l'industrie du pétrole, joint constitué par un élément mâle (1) et un élément femelle (9) comportant des filetages tronconiques frettants (3,11) et/ou des surfaces frettantes et au moins un couple de butées de limitation de vissage (2,10) mises sous contraintes axiales lors du vissage, caractérisé par le fait que l'on détermine sur la périphérie de l'élément mâle et sur la périphérie de l'élément femelle un repère (8) dont les positions sont telles que, lorsque les deux repères (8) sont amenés l'un en face de l'autre, les butées de limitation de vissage (2,10) de l'élément mâle (1) et l'élément femelle (9) viennent au contact l'une de l'autre pour la première fois; qu'après avoir enduit de graisse les filetages et les butées on procède au vissage du joint en appliquant un couple suffisant pour faire tourner dans le sens du vissage un élément par rapport à l'autre d'un angle prédéterminé en fonction de la nature du joint au-delà du point où les repères sont l'un en face de l'autre, et que l'on mesure le couple nécessaire pour obtenir un tel vissage; que l'on renouvelle cette opération sur un nombre suffisant d'éléments mâles et d'éléments femelles de même type pour prendre en considération les variations dimensionnelles dues aux tolérances de fabrication; et que l'on détermine le domaine des couples de vissage que l'on doit appliquer aux joints de ce type avec la graisse qui a été utilisée.

2. Procédé selon la revendication 1, caractérisé par le fait que les repères sont réalisés sur l'élément mâle et sur l'élément femelle en déterminant sur chacun de ces éléments la génératrice pour laquelle un filet donné se trouve à une distance axiale donnée de la butée de limitation de vissage de l'élément considéré.

3. Procédé selon la revendication 2, caractérisé par le fait que dans le cas de filetages coniques, on tient compte de l'allongement de l'élément mâle et du raccourcissement de l'élément femelle, dus au frettage dans les filetages et dans toutes autres surfaces frettantes.

4. Procédé selon l'une des revendications précédentes, caractérisé par le fait que l'angle prédéterminé au-delà duquel on visse le joint au-delà du point où les repères sont l'un en face de l'autre est compris entre 5 et 15 degrés.

5. Dispositif utilisable pour la mise en oeuvre du procédé selon l'une des revendications précédentes, caractérisé par le fait qu'il est constitué par un couple de calibres de repérage (4,12) qui comportent chacun une butée (5,13) correspondant à la butée de limitation de vissage (2,10) de l'élément mâle ou de l'élément femelle, au moins un filet (6,14) correspondant au filetage de l'élément correspondant et un moyen tel qu'une fente (7) permettant le marquage d'un repère (8,8') sur l'élément sur lequel le calibre est engagé, la distance (L) entre le point du filet situé en face du repère et la butée est la même sur le calibre mâle que sur le calibre femelle.

6. Dispositif selon la revendication 5, caractérisé par le fait qu'il comporte deux calibres (4,12) mâle et femelle de forme généralement cylindrique qui sont munis chacun de surfaces correspondant uniquement aux surfaces filetées (3,11) et aux butées de limitation de vissage (2,10) de l'élément mâle et de l'élément femelle du joint, le repère (7) du calibre mâle étant aligné avec le repère (7) du calibre femelle lorsque après vissage les surfaces de limitation de vissage des deux calibres arrivent au contact l'une de l'autre.

7. Dispositif selon la revendication 5, caractérisé par le fait que le calibre a la forme d'une barrette constituée par un secteur de largeur réduite d'un calibre cylindrique.

8. Dispositif selon l'une quelconque des revendications 5 à 7, caractérisé par le fait que la position angulaire des repères (7) sur les calibres (4, 12) tient compte de l'allongement de l'élément mâle et du raccourcissement de l'élément femelle qui sont dus aux différentes zones de frettage du joint.

0153224

1/2

*Fig:1*

*Fig:2*

*Fig.3*

*Fig.4*

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int. Cl.4) |
|---|---|---|---|
| A | US-A-1 907 461 (B.W. SUNDE) <br> * En entier * | 1 | E 21 B 19/16 |
| A | US-A-4 093 281 (M.B. JANSEN Jr.) <br> * En entier * | 1 | |

--- 

-----

**DOMAINES TECHNIQUES RECHERCHES (Int. Cl.4)**

E 21 B 19
G 01 L 5
F 16 L 15

Le présent rapport de recherche a été établi pour toutes les revendications

| Lieu de la recherche <br> LA HAYE | Date d'achèvement de la recherche <br> 08-05-1985 | Examinateur <br> VAN ASSCHE P.O. |
|---|---|---|